# EUROPÄISCHE PATENTSCHRIFT

(11) **EP 2 445 769 B1**
(45) Veröffentlichungstag und Bekanntmachung des Hinweises auf die Patenterteilung: **01.05.2013**
(21) Anmeldenummer: 10724082.2
(22) Anmeldetag: 11.06.2010
(51) Int. Cl.: B61C 17/04, B61D 27/00

(54) **ENERGIEOPTIMIERTES KLIMASYSTEM FÜR LOKOMOTIVEN MIT ZWEI FÜHRERSTÄNDEN**
ENERGY-OPTIMIZED CLIMATE CONTROL SYSTEM FOR LOCOMOTIVES HAVING TWO CONTROL CONSOLES
SYSTÈME DE CLIMATISATION OPTIMISÉ DU POINT DE VUE ÉNERGÉTIQUE, POUR LOCOMOTIVES À DEUX POSTES DE CONDUITE

(30) Priorität: 26.06.2009 DE 102009031237
(43) Veröffentlichungstag der Anmeldung: 02.05.2012
(73) Patentinhaber: Siemens Aktiengesellschaft, 80333 München (DE)
(72) Erfinder: SCHÜTZ, Winfried, 82140 Olching (DE)
(86) Internationale Anmeldenummer: PCT/EP2010/058212
(87) Internationale Veröffentlichungsnummer: WO 2010/149508

(56) Entgegenhaltungen:
- EP-A1- 2 127 991
- EP-A2- 2 078 654
- WO-A1-02/081281
- DE-A1- 2 750 314

## Beschreibung

Die Erfindung betrifft Schienengeführtes Triebfahrzeug mit zwei stirnseitig angeordneten Führerständen und einem Maschinenraum zwischen den Führerständen, wobei eine erste Luftaufbereitungseinheit zum Klimatisieren des einen Führerstandes und eine zweite Luftaufbereitungseinheit zum Klimatisieren des anderen Führerstandes vorgesehen sind, wobei in dem Maschinenraum eine zentrale Wärmeanlage angeordnet ist und Verbindungsmittel die zentrale Wärmeanlage mit der ersten und zweiten Luftaufbereitungseinheit verbinden, wobei die Verbindungsmittel einen Wärmeträger aufweisen, so dass der Austausch von Wärme zwischen den Luftaufbereitungseinheiten und der zentralen Wärmeanlage ermöglicht ist, und wobei die zentrale Wärmeanlage eine zentrale Kälteeinheit zum Kühlen des Wärmeträgers aufweist.

Ein solches schienengeführtes Triebfahrzeug ist aus der DE 27 50 314 A1 bereits bekannt. Dort ist eine Grubenlokomotive offenbart, die zwei stirnseitig angeordnete Führerstände aufweist, zwischen denen sich ein Maschinenraum erstreckt. In dem Maschinenraum ist eine zentrale Wärmeanlage angeordnet, wobei Verbindungsmittel vorgesehen sind, welche die zentrale Wärmeanlage mit einer ersten und einer zweiten Luftaufbereitungseinheit verbinden, die jeweils in einem der Führerstände angeordnet sind. Die Verbindungsmittel sind mit einem Wärmeträger befüllt, der einen Austausch von Wärme zwischen den Luttautbereitungseinheiten in den Führerständen und in der zentralen Wärmeanlage ermöglicht.

Lokomotiven und andere schienegeführte Triebfahrzeuge weisen in der Regel an jeder ihrer Stirnseiten einen Führerstand auf, in dem der Fahrzeugführer die Fahrt des Triebfahrzeugs steuert. Zum Bereitstellen einer möglichst angenehmen Raumluft ist gemäß dem Stand der Technik für jeden Führerstand eine raumlufttechnische Anlage vorgesehen, wobei jede raumlufttechnischen Anlagen selbstständig und unabhängig von der anderen raumlufttechnischen Anlage arbeitet. Jede raumlufttechnische Anlage ist daher in der Regel sowohl zum Heizen bei tiefen Außentemperaturen als auch zum Kühlen in warmen Jahreszeiten eingerichtet.

Die raumlufttechnischen Anlagen gemäß dem Stand der Technik weisen eine so große Kühl- bzw. Heizleistung auf, dass diese auch extreme Anforderungen, die bei sehr hohen oder tiefen Außentemperaturen vorliegen, erfüllen. Wie jedoch eigene Untersuchungen ergeben haben, treten solche extremen Außentemperaturen nur selten auf. Im Hinblick auf die üblicherweise vorliegenden Außentemperaturen sind die bekannten raumlufttechnischen Anlagen eines Triebfahrzeuges daher überdimensioniert, teuer und mit hohen Energieverlusten behaftet. Aufgabe der Erfindung ist es daher, ein Triebfahrzeug der eingangs genannten Art bereitzustellen, das kostengünstig und energiesparend klimatisiert werden kann.

Die Erfindung löst diese Aufgabe dadurch, dass die zentrale Kälteeinheit zum Kühlen von Bauteilen des Maschinenraums eingerichtet ist.

Das erfindungsgemäße Triebfahrzeug, beispielsweise eine Lokomotive, verfügt über eine zentrale Warmeanlage, die im Maschinenraum beispielsweise verteilt angeordnet ist, und wenigstens zwei Luftaufbereitungseinheiten. Die zentrale Wärmeanlage ist über Verbindungsmittel mit den Luftaufbereitungseinheiten verknüpft, wobei die Verbindungsmittel einen Wärmeträger aufweisen, der einen effizienten Wärmeaustausch zwischen der zentralen Wärmeanlage und den Luftaufbereitungseinheiten ermöglicht. Dabei sind die Luftaufbereitungseinheiten hinsichtlich ihrer jeweiligen Kühl- und Heizleistung voneinander unabhängig regelbar und können unter Vernachlässigung der selten auftretenden klimatischen Extrembedingungen für den jeweiligen Raum ausgelegt werden, den sie klimatisieren. Davon abweichend sind die Luftaufbereitungseinheiten zum Bereitstellen einer Zusatzleistung ausgelegt, mit welcher dem Führerstand bei extremen Außenbedingungen Wärme entzogen oder zugeführt wird. Bei extremen Außentemperaturen wird die Heiz- bzw. Kühlleistung der zentralen Wärmeanlage vorteilhafterweise nur im besetzten Führerstand bereit gestellt, so dass auch bei extremen Außentemperaturen für eine ausreichende Heiz- bzw. Kühlleistung gesorgt ist. Auf diese Art und Weise können die Betriebskosten des erfindungsgemäßen Triebfahrzeuges und herabgesetzt werden.

Erfindungsgemäß ist in dem Maschinenraum eine zentrale Wärmeanlage angeordnet, die einen Wärmeträger aufheizt oder abkühlt. Die zentrale Wärmeanlage ist über Verbindungsmittel, in dem der Wärmeträger beispielsweise zirkuliert, mit den beiden Luftaufbereitungseinheiten in den Führerständen verbunden, so dass der Austausch von Wärme zwischen der zentralen raumlufttechnischen Anlage und den beiden Luftaufbereitungsanlagen ermöglicht wird. Die zentrale Wärmeanlage ist vorteilhafterweise hinsichtlich ihrer Leistung so ausgelegt, dass sie die Luftaufbereitungseinheiten vollständig versorgt, so dass diese ihre jeweiligen Führerstände ausreichend gut klimatisieren, ohne Zusatzleistung aufbringen zu müssen.

Wenn die zentrale Wärmeanlage aufgrund extremer Außentemperaturen nicht mehr die erforderliche Kühl- oder Heizleistung alleine für beide Führerstände bereitstellen kann, dann kann der nicht besetzte Führerstand und dessen Luftaufbereitungseinheit mittels Regelventile vom Wärmeträgerkreislauf entkoppelt werden, um den besetzten Führerstand ausreichend klimatisieren zu können. Somit ist gewährleistet, dass der besetzte Führerstand bei allen Betriebsbedingungen den Anforderungen entsprechend klimatisiert werden kann.

Erfindungsgemäß weist die zentrale Wärmeanlage eine zentrale Kälteeinheit zum Abkühlen des Wärmeträgers auf. Die Kälteeinheit ist nur zum Kühlen eingerichtet und weist die hierfür erforderlichen Komponenten, wie Kompressor, Verdampfer, Kondensator, Kältekreis und dergleichen auf. Die Kühlleistung der zentralen Kühleinheit ist zweckmäßigerweise so bemessen, dass diese zum alleinigen Kühlen eines der Führerstände auch bei extremen Außentemperaturen eingerichtet ist. Die zentrale Kühleinheit sorgt erfindungsgemäß auch für eine Kühlung von Komponenten des Maschinenraums wie Gerüsten, Elektronik- Antriebsbauteile oder dergleichen, wenn die volle Leistung der zentralen Kühleinheit nicht benötigt wird. Dies ist insbesondere in heißen Klimazonen von großem Vorteil, da einige elektronische Komponenten bei hohen Temperaturen in ihrer Funktion beeinträchtigt sein können. Dazu verfügt der Wärmeträgerkreislauf über Wärmeauskopplungsmittel, die in dem Maschinenraum angeordnet sind.

Gemäß einer vorteilhaften Ausgestaltung der Erfindung weisen die Verbindungsmittel einen Wärmeträgerkreislauf mit einer Wärmeträgerflüssigkeit als Wärmeträger auf, wobei eine Umwälzpumpe zum Umwälzen der Wärmeträgerflüssigkeit in dem Wärmeträgerkreislauf vorgesehen ist. Der Wärmeträgerkreislauf dient zum Transport oder mit anderen Worten zum Führen eines flüssigen Wärmeträgers. Flüssige Wärmeträger, also Wärmeträgerflüssigkeiten, verfügen im Gegensatz zu gasförmigen Wärmeträgern über eine erhöhte Wärmekapazität, so dass der Transport von Wärme oder Kälte mittels des flüssigen Wärmeträgers im Vergleich zu gasförmigen Wärmeträgern durch kompaktere Verbindungsmittel ermöglicht ist. Der Wärmeträgerkreislauf ist zweckmäßigerweise durch ein Rohrsystem realisiert, wobei die Rohrverbindungen des Wärmeträgerkreislaufs einen kleineren Durchmesser aufweisen als dies beim Einsatz von gasförmigen Wärmeträgern der Fall wäre.

Die Verbindungsmittel umfassen vorteilhafterweise Schaltelemente zum Unterbrechen der Wirkverbindung zwischen der zentrale Wärmeanlage und den Luftaufbereitungseinheiten. Die Schaltelemente sind beispielsweise ansteuerbare Sperr- oder Regelventile sowie Überbrückungszweige oder dergleichen.

Gemäß einer diesbezüglich zweckmäßigen Weiterentwicklung weist der Wärmeträgerkreislauf Überbrückungszweige zum Überbrücken jeder Luftaufbereitungseinheit und ansteuerbare Überbrückungsventile auf. Die Luftaufbereitungseinheiten sind zweckmäßigerweise integriert in den Wärmeträgerkreislauf, so dass der umgewälzte Wärmeträger oder zweckmäßigerweise die umgewälzte Wärmeträgerflüssigkeit auch über die Luftaufbereitungseinheiten transportiert wird. Die Überbrückungszweige ermöglichen jedoch, dass der gewählte Wärmeträger beispielsweise die Wärmeträgerflüssigkeit an den Luftaufbereitungseinheiten vorbei transportiert wird, so dass Wirkverbindung zwischen den Luftaufbereitungseinheiten unterbrochen ist. Die Überbrückungszweige sind zweckmäßigerweise mit einem Regelventil bestückt, wobei weitere Regelventile im Wärmeträgerkreislauf angeordnet sind und zwar in Umwälzrichtung gesehen zwischen dem Überbrückungszweig und der zu überbrückenden Luftaufbereitungseinheiten. Dabei sind die Regelventile zweckmäßigerweise elektronisch ansteuerbare Regelventile, so dass beispielsweise vom Heiz- oder Kühlbedarf des Führerstandes aus durch Schließen bzw. Öffnen der Regelventile mittels zweckmäßiger Ansteuersignale eine der Luftaufbereitungseinheiten bei Bedarf überbrückt werden kann oder in Reihe geschaltet werden kann.

Bei einer bevorzugten Variante der Erfindung weist die zentrale Wärmeanlage eine zentrale Aufwärmeinheit zum Erwärmen des Wärmeträgers auf. Die zentrale Wärmeanlage umfasst daher entweder nur eine Kälteeinheit oder nur eine Aufwärmeinheit oder eine Kälteeinheit und eine Aufwärmeinheit. Die Leistung der Aufwärmeinheit ist beispielsweise der Leistung der Kälteeinheit entsprechend dimensioniert. So ist bei "normalen" Temperaturen das Heizen beider Führerstände möglich. Bei Extrembedingungen wird von der Aufwärmeinheit nur ein Führerstand beheizt, wobei die Wärmeleistung der Aufwärmeinheit ausreichend ist um den Führerstand allein zu beheizen. Abweichend hiervon ist die Aufwärmeinheit für geringere Leistungen ausgelegt, so dass Zusatzheizeinheiten erforderlich sind, die Teil der Luftaufbereitungseinheiten sind.

Zweckmäßigerweise ist die zentrale Aufwärmeinheit zur Aufnahme von Abwärme eingerichtet ist, die beim Kühlen eines Bauteils des Maschinenraums entsteht, und wobei die Abwärme auf den Wärmeträger übertragen und dieser so erwärmt wird. Auf diese Weise können Heizkosten und Umweltbelastungen minimiert werden.

Gemäß einer diesbezüglich zweckmäßigen Weiterentwicklung ist die zentrale Aufwärmeinheit über einen Ventilverteilblock mit einem Wärmeaustauscher gekoppelt, der Teil eines Kühlkreislaufs für ein Bauteil des Maschinenraums ist.

Die erste und zweite Luftaufbereitungseinheit weisen zweckmäßigerweise jeweils zusätzliche elektrische Heizregister zur Wärmeerzeugung, einen Lüfter zum Erzeugen eines Luftstromes und einen Luft-Flüssigwärmetauscher auf, der mit der zentralen raumlufttechnischen Anlage über die Verbindungsmittel verbunden ist. Im Kühlbetrieb wird daher der beispielsweise flüssige Wärmeträger von der zentralen Kälteeinheit abgekühlt. Der abgekühlte Wärmeträger wird anschließend von einer Umwälzpumpe zum Luft-Flüssigwärmetauscher der ersten bzw. zweiten Luftaufbereitungseinheit transportiert, der dem an ihm vorbei geführten Luftstrom Wärme entzieht, so dass der Luftstrom abgekühlt wird. Der abgekühlte Luftstrom wird schließlich den Führerständen zugeleitet.

Zweckmäßigerweise weist der Wärmeträgerkreislauf einen Ausgleichsbehälter auf. Das Volumen der Wärmeträgerflüssigkeit ist temperaturabhängig. So hat eine kältere Wärmeträgerflüssigkeit ein kleines Volumen als eine hoch erhitzte Wärmeträgerflüssigkeit. Um diese temperaturbedingten Volumenschwankungen auszugleichen, ist der Ausgleichsbehälter vorgesehen.

Gemäß einer bevorzugten Ausgestaltung der Erfindung verfügt der zentrale Wärmeanlage über Einkopplungsmittel zur Wärmeaufnahme oder Wärmeabgabe von bzw. an einen externen Kühl- oder Wärmekreislauf des Triebfahrzeugs. Aufgrund dieser zweckmäßigen Weiterentwicklung ist es möglich, ansonsten ungenutzte Verlustwärme, die beim Antrieb des schienengeführten Triebfahrzeugs entsteht, sinnvoll beispielsweise zum Heizen eines der Führerstände einzusetzen. Auf diese Weise wird der Energieverbrauch jeder raumlufttechnischen Anlage im Heizbetrieb noch weiter herabgesetzt.

Abweichend hiervon ist es jedoch auch möglich einen Bestandteil des Triebfahrzeugs, der beispielsweise kälteempfindlich ist, über den Wärmeträgerkreislauf zu beheizen. Die Einkopplungsmittel umfassen beispielsweise einen Kopplungswärmetauscher, der an den Wärmeträgerkreislauf anschließbar ist. Hierbei dient eine zweckmäßige Ventilanordnung, mit elektrisch ansteuerbaren Regelventilen für eine steuerbare Lenkung der Wärmeträgerflüssigkeit über den Kopplungswärmetauscher. Der Kopplungswärmetauscher ist auf der anderen Seite in den Kühlkreislauf beispielsweise eines Umrichters oder sonstigen Bauteils des Triebfahrzeugs angeschlossen, das mittels eines solchen Kühlkreislaufs während des Betriebs des Triebfahrzeugs gekühlt wird.

Gemäß einer diesbezüglich vorteilhaften Weiterentwicklung umfasst der Wärmeträgerkreislauf einen Ventilverteilblock mit einem Bypasszweig zum Überbrücken der Einkopplungsmittel. Der Ventilverteilerblock weist wenigstens ein ansteuerbares Ventil auf, das zum Schließen bzw. Öffnen des Bypasszweiges eingerichtet ist.

Gemäß einer bevorzugten Ausgestaltung der Erfindung weist jede Luftaufbereitungseinheit jeweils einen Flüssigkeits- Luft-Wärmetauscher auf, und sind mit einem Flüssigkeits-Luft- und Flüssigkeit-Flüssigkeit-Wärmetauscher der zentralen Wärmeanlage über die Verbindungsmittel verbunden.

Gemäß einer diesbezüglich zweckmäßigen Weiterentwicklung ist der Flüssigkeits- Luft Wärmetauscher ein von Luft durchströmbarer Luft-/Flüssigwärmetauscher. Luft-/Flüssigwärmetauscher, die einen Wärmeübergang zwischen Luft und Flüssigkeit herbeiführen, sind dem Fachmann bestens bekannt, so dass an dieser Stelle auf deren Aufbau und Funktionsweise nicht detailliert eingegangen zu werden braucht. Der Vollständigkeit halber sei jedoch darauf hingewiesen, dass die Wärmeanlage in der Regel einen Lüfter zum Erzeugen eines Luftstromes aufweist, der den Flüssigkeits- Luft Wärmetauscher durchsetzt. Der Flüssigkeits- Luft Wärmetauscher umfasst beispielsweise ein handelsübliches Register mit Lamellen zum Vergrößern der Oberfläche des Flüssigkeits- Luft Wärmetauschers, an dem der Luftstrom vorbeiströmt. Beim Vorbeiströmen an den Lamellen kommt es zum Übergang von Wärme von den Lamellen auf den Luftstrom, der auf diese Art und Weise erwärmt oder gekühlt und anschließend in die Führerstände oder einen sonstigen Innenraum der Lokomotive eingeleitet wird.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel eines erfindungsgemäßen Triebfahrzeugs in einer Seitenansicht,
- Figur 2: das Triebfahrzeug gemäß Figur 1 in einer Draufsicht,
- Figur 3: eine schematische Darstellung der raumlufttechnischen Anlagen des Triebfahrzeugs gemäß Figur 1,
- Figur 4: eine schematische Darstellung der raumlufttechnischen Anlagen eines weiteren Ausführungsbeispiels des erfindungsgemäßen Triebfahrzeugs.

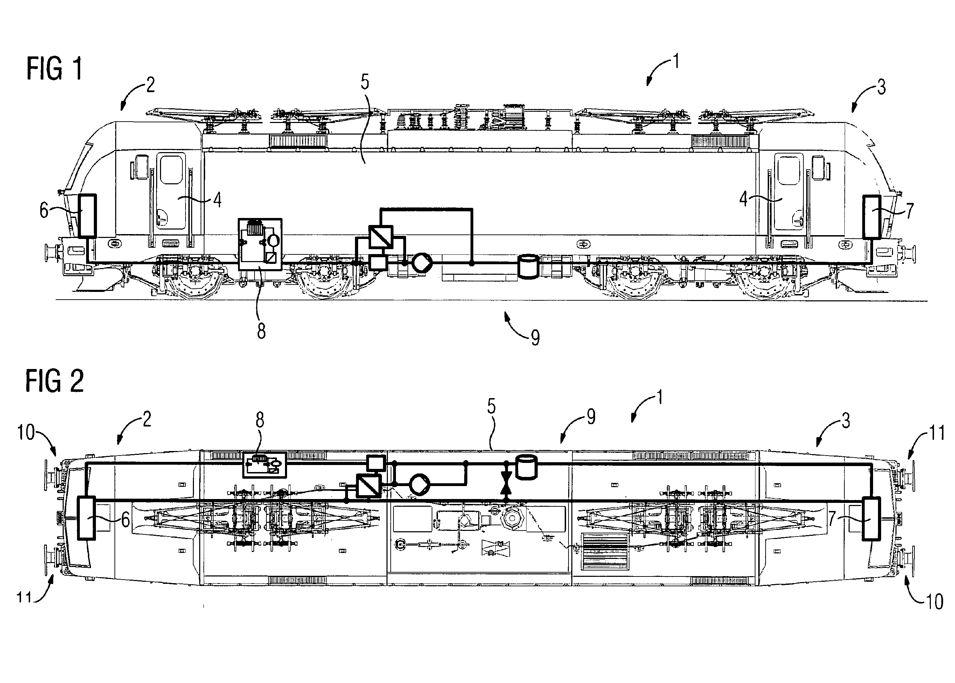

Figur 1 zeigt ein Ausführungsbeispiel eines erfindungsgemäßen Triebfahrzeugs, nämlich eine Lokomotive 1, in einer Seitendarstellung. Es ist erkennbar, dass die Lokomotive 1 einen ersten Führerstand 2 an einer Stirnseite sowie einen zweiten Führerstand 3 an der gegenüberliegenden Stirnseite der Lokomotive 1 aufweist. Jeder Führerstand 2 verfügt über eine Eintrittstür 4, über die der Führerstand von einem Fahrzeugführer von außen betreten werden kann. Zwischen dem Führerstand 2 und dem Führerstand 3 erstreckt sich ein Maschinenraum 5, dessen Längsausdehnung im Vergleich zu derjenigen der Führerstände 2 bzw. 3 erheblich größer ist.

Zum Einstellen der jeweiligen Raumluft weist der Führerstand 2 eine erste Luftaufbereitungseinheit 6 und der zweite Führerstand 3 eine zweite Luftaufbereitungseinheit 7 auf. Im Maschinenraum 5 ist eine zentrale Wärmeanlage 40 angeordnet, die mit der ersten Luftaufbereitungseinheit 6 und der zweiten Luftaufbereitungseinheit 7 über Verbindungsmittel 9 in Wirkverbindung steht. Die zentrale Wärmeanlage 40 und die Verbindungsmittel 9 werden im Folgenden noch genauer beschrieben.

Figur 2 zeigt die Lokomotive 1 gemäß Figur 1 in einer teilweise transparenten Draufsicht. Es ist erkennbar, dass jede Stirnseite der Lokomotive 1 über zweckmäßige Lufteintritts-10 bzw. Luftaustrittsöffnungen 11 verfügt, die über zweckmäßige Luftführungskanäle mit der jeweiligen Luftaufbereitungseinheit 6 bzw. 7 verbunden sind. Weiterhin ist schematisch angedeutet, dass im Maschinenraum 5 elektronische oder elektrische Antriebskomponenten wie Generatoren, Umrichter und dergleichen vorgesehen sind.

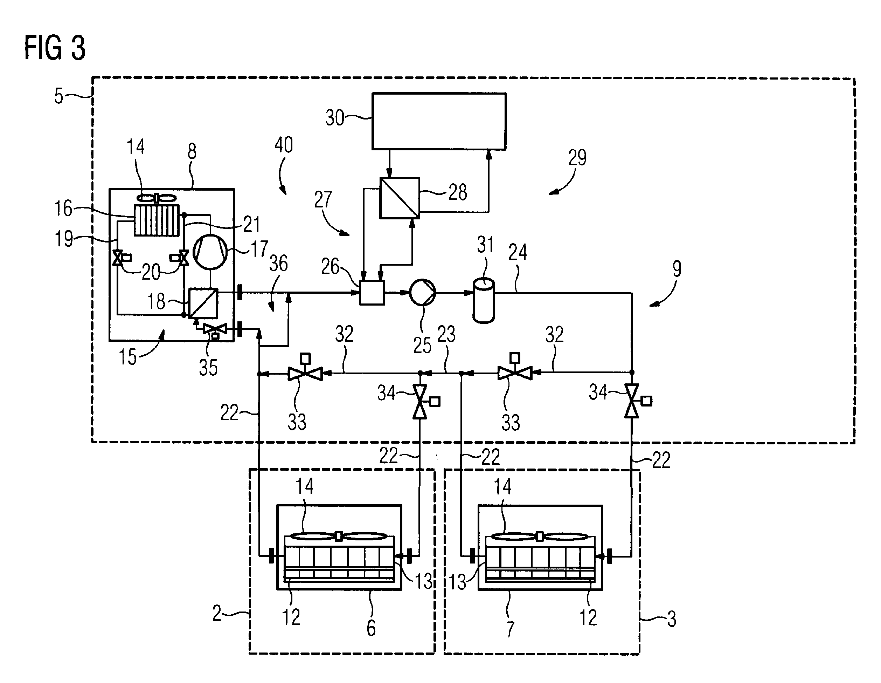

Figur 3 verdeutlicht die Luftaufbereitungseinheiten 6, 7, der Lokomotive 1 und deren Wärmekopplung über die Verbindungsmittel 9 in einer schematischen Darstellung, wobei die Führerstände 2 bzw. 3 durch eine dick gestrichelte Umrandung dargestellt sind. Der Maschinenraum 5 ist ebenfalls durch eine dicke gestrichelte Linie verdeutlicht. Dabei sei darauf hingewiesen, dass die Führerstände 2, 3 auch weiterhin stirnseitig, also in einer Seitenansicht der Lokomotive rechts und links des Maschinenraumes 5, angeordnet sind. Es ist erkennbar, dass die zentrale Wärmeanlage 40 eine zentrale Kälteeinheit 8 aufweist, die nur zum Kühlen des Wärmeträgers der Verbindungsmittel 9 eingerichtet ist. Die erste und die zweite Luftaufbereitungseinheit 6 bzw.7 sind zusätzlich mit einem Heizregister 12, einen Luft-Flüssigwärmertauscher 13 sowie über einen Lüfter 14 zum Erzeugen eines Luftstromes ausgestattet. Die zentrale Kälteeinheit 8 verfügt über einen Kältekreislauf 15 mit einem Kondensator 16, einem Lüfter 14, einem Kältekompressor 17, einem als Platten-Verdampfer 18 ausgebildeten Flüssig-Kältemittelwärmetauscher und einem Rohrleitungssystem 19, das mit Regelventilen 20 ausgerüstet ist. Dabei ist ein Bypasszweig 21 zum Überbrücken des PlattenVerdampfers 18 vorgesehen, wobei der Überbrückungszweig 21 ebenfalls mit einem Regelventil 20 ausgestattet ist.

Die Luft-/Flüssigwärmetauscher 13 der ersten und zweiten Luftaufbereitungseinheit sind über ein zweckmäßiges Rohrleitungssystem 22 mit dem Plattenverdampfer 18 der zentralen Kälteeinheit 8 verbunden. Das Rohrleitungssystem 22 ist Teil der Verbindungsmittel 9.

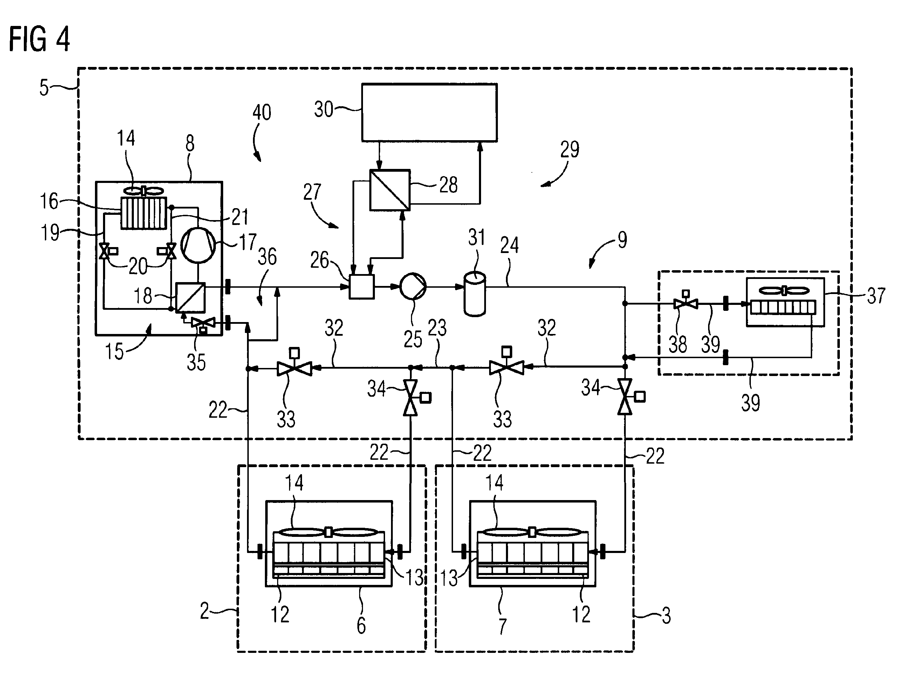

Weiterhin ist erkennbar, dass die Verbindungsmittel 9 eine in Figur 3 unten dargestellte Wärmeträgerleitung 23 aufweisen. Die Wärmeträgereinheit erstreckt sich durch den gesamten Maschinenraum 5. Sie ist auf Grund der gewählten Darstellung in den Figuren 3 und 4 verkürzt gezeigt. Die erste und zweite Luftaufbereitungseinheit 6, 7 sind über das Rohrleistungssystem 22 mit der Wärmeträgerleitung 23 verbunden. Auf diese Weise kommuniziert der Luft- Flüssigkeitswärmetauscher 13 der Luftaufbereitungseinheit 6 mit dem Luft- Flüssigkeitswärmetauscher 13 der Luftaufbereitungseinheit 7.

Die Verbindungsmittel 9 umfassen ferner eine in Figur 3 oberhalb der Wärmeträgerleitung 23 dargestellte Wärmeträgerleitung 24 zur Anbindung des Plattenverdampfers 18 der Kälteeinheit 8. Durch die Wärmeträgerleitung 23 und die Wärmeträgerleitung 24 sowie die Rohrleitungen 22 ist ein Wärmeträgerkreislauf bereitgestellt, in dem ein flüssiger Wärmeträger als Wärmeträgerflüssigkeit, beispielsweise ein Glykolalkohol, umwälzbar ist. Zum Umwälzen der besagten Wärmeträgerflüssigkeit dient eine Umwälzpumpe 25. Wie durch die in der Figur 3 angedeuteten Pfeile dargestellt ist, wird die Wärmeträgerflüssigkeit von der Luftaufbereitungseinheit 7 zur Luftaufbereitungseinheit 6 und von der Luftaufbereitungseinheit 6 zur zentralen Kälteeinheit 8 transportiert. Von der zentralen Kälteeinheit 8 gelangt die Wärmeträgerflüssigkeit über die Wärmeträgerleitung 24 zur Luftaufbereitungseinheit 7.

Die zentrale Wärmeanlage 40 umfasst weiterhin auch eine zentrale Aufwärmeinheit, die einen in der Wärmeträgerleitung 24 angeordneten Ventilverteilerblocks 26 aufweist. Mit Hilfe des Ventilverteilerblocks 26 ist es möglich, die Wärmeträgerflüssigkeit über einen Einkopplungskreislauf 27 zu leiten, in dem ein Einkopplungs-Wärmetauscher 28 angeordnet ist. Der Einkopplungs-Wärme-Tauscher 28 ist gleichzeitig Teil eines Kühlkreislaufes 29 eines z.B. Hilfsbetriebeumrichters oder Dieselmotorkühlers 30, der als elektronische oder mechanische Komponente Teil des Maschinenraumes 5 der Lokomotive 1 ist. Mit Hilfe der zentralen Aufwärmeinheit, die in dem gezeigten Fall Einkopplungsmittel 26, 27, 28 umfasst, es somit möglich, die Wärmeträgerflüssigkeit mit der am z.B. Hilfsbetriebeumrichter oder Dieselmotorkühler 36 abfallenden Wärme zu speisen. Die am Hilfsbetriebeumrichter abfallende Verlustwärme sorgt somit für das Heizen wenigstens eines der Führerstände 2, 3 mit Hilfe der Luftaufbereitungseinheit 6 beziehungsweise 7.

Zum Ausgleich von temperaturbedingten Volumenschwankungen des flüssigen Wärmeträgers ist ein Ausgleichsbehälter 31 in der Wärmeträgerleitung 24 vorgesehen. Auf diese Weise können die Volumenschwankungen ausgeglichen werden. Zum Überbrücken einer Luftaufbereitungseinheit 6, 7 dienen Überbrückungszweige 32, die jeweils mit Regelventilen 33 ausgerüstet sind. Weitere Regelventile 34 sind in der Rohrleitung 22 zur ersten beziehungsweise zur zweiten Luftaufbereitungseinheit 6, 7 vorgesehen. Durch Öffnen bzw. Schließen der Regelventile 33, 34 kann beispielsweise die Luftaufbereitungseinheit 6 des Führerstandes 2 überbrückt werden, so dass der flüssige Wärmeträger nicht mehr über die Luftaufbereitungseinheit 6 geführt wird. Die Luftaufbereitungseinheit 6, 7 sind entkoppelt. Entsprechendes gilt für die zentrale Kälteeinheit 8 im Zusammenhang mit dem Regelventil 35 und dem Überbrückungszweig 36.

Die Wirkungsweise des in Figur 3 dargestellten Ausführungsbeispiels der erfindungsgemäßen Vorrichtung kann wie folgt beschrieben werden:
Ist beispielsweise der Führerstand 2 besetzt und der Führerstand 3 unbesetzt und herrschen keine extremen Außentemperaturen, beispielsweise bei Temperaturen im Bereich von 1°C, sind die Luftaufbereitungseinheiten 6 und 7 mit Unterstützung der vom Hilfsbetriebeumrichter oder Dieselmotorkühler 30 gewonnenen Wärmeenergie in der Lage die Führerstände 2 und 3 ohne Hilfe der elektrischen Heizregister 12 zu beheizen. Die elektrischen Heizregister 12 werden durch eine figürlich nicht dargestellte Regelung des gesamten Klimasystems abgeschaltet, sobald genügend Abwärme aus dem Einkopplungsmitteln 26,27,28 an die Wärmeträgerflüssigkeit abgegeben wird. Die elektrischen Heizregister 12 der Luftaufbereitungseinheit 6 bzw.7 sind nur in Betrieb, wenn die Wärmeträgerflüssigkeit noch nicht ausreichend Wärmeenergie aus dem Einkopplungskreis 27 über den Kopplungswärmetauscher 28 zur Verfügung stellen kann, weil z. B. die Lokomotive 1 im Freien stand und die Aggregate des Einkopplungskreises sich nach Inbetriebsetzen erst erwärmen müssen. Die Wärmeträgerflüssigkeit wird mittels Kopplungswärmetauscher 28, der ein Flüssigkeit - Flüssigkeit Wärmetauscher ist, durch die Abwärme des z. B. Hilfsbetriebeumrichters oder Dieselkühlers 30 erwärmt und strömt über die Wärmeträgerleitungen 24 und 23 sowie den Rohrleitungen 22 zu den Luft- Flüssigkeitswärmetauschern 13 in den Luftaufbereitungseinheiten 6 bzw.7 der Führerstände 2 und 3.

Möchte man bei gleichen Außenbedingungen nur den besetzten Führerstand 2 beheizen, dann kann man durch die Steuer- und Regelventile 33, 34 den Luft- Flüssigkeitswärmetauscher 13 der Luftaufbereitungseinheit 7 des Führerstands 3 umgehen. Die Aufheizzeit des Führerstandes 2 wird durch die zusätzliche Wärmeenergie des Wärmeträgers verkürzt.

Ist beispielsweise der Führerstand 2 bei niedrigen Außentemperaturen, beispielsweise bei - 25°C, besetzt und der Führerstand 3 unbesetzt, kann durch die Steuer- und Regelventile 33, 34 der Luft- Flüssigkeitswärmetauscher 13 der Luftaufbereitungseinheit 7 des Führerstands 3 umgangen werden. Die gesamte Heizleistung steht dann für den besetzten Führerstand 2 zur Verfügung.

Erst wenn die Außentemperaturen extrem niedrig im Bereich von -40°C sind, müssen die elektrischen Heizregister 9 der raumlufttechnischen Anlagen 6 bzw. 7 durch die Steuerung des Klimasystems wieder zugeschaltet werden, um die gewünschten Raumtemperaturen im besetzten Führerstand 2 einstellen zu können.

Durch die Ausnutzung der Abwärme, können die elektrischen Heizregister 9 der Luftaufbereitungseinheiten 6 bzw. 7 entsprechend weniger leistungsstark ausgeführt werden und bedarfsgerechter eingesetzt werden. Daraus resultiert im Betrieb des Fahrzeugs eine entsprechende niedrigere Leistungsaufnahme und effizientere Ausnutzung der Energie, um Betriebskosten minimieren zu können.

Eine entsprechende Vorgehensweise erfolgt bei extrem hohen Außentemperaturen, wobei jedoch die zentrale Kälteeinheit 8 mit den Luftaufbereitungseinheiten 6 und 7 gekoppelt wird. Dazu sind die Regelventile 33, 34, 35 jeweils geöffnet, wo hingegen der Ventilverteilerblock 24 den Einkopplungskreislauf 25 von der Durchströmung trennt. Die Kühlleistung der zentralen Kälteeinheit 8 ist so dimensioniert, dass bei extremen Außentemperaturen nur der besetzte Führerstand ausreichen gut gekühlt werden kann.

Ist beispielsweise der Führerstand 2 besetzt und der Führerstand 3 unbesetzt und herrschen keine extremen Außentemperaturen, beispielsweise bei Temperaturen im Bereich von 15-25°C, reicht die zentrale Kälteeinheit 8 aus, um beide Führerstände 2 und 3 ausreichend gut zu klimatisieren.

Ist beispielsweise der Führerstand 2 besetzt und der Führerstand 3 unbesetzt und herrschen extreme Außentemperaturen, beispielsweise bei Temperaturen im Bereich von 30- 40°C, reicht die Leistung der zentralen Kälteeinheit 8 jedoch nur aus, um den besetzten Führerstand 2 ausreichend gut zu klimatisieren.

Durch den Einsatz einer zentralen Kälteeinheit 8 benötigt man keine zwei separaten Kälteeinheiten, deren Wirkungsgradverluste und deren Gesamtleistung auf einen Führerstand bei extremen Temperaturen dimensioniert ist, weniger elektrische Leistungsaufnahme zum Klimatisieren, als wenn man, wie heute üblich jeden Führerstand separat mit einer Kälteeinheit auf extreme Temperaturen auslegt..

Ferner werden zu ca. 80 % der Einsatzdauer im Kühlbetrieb beide Führerstände 2 und 3 ausreichen gut klimatisiert und nur bei extremen Temperaturen der unbesetzte Führerstand über die Regelventile 32 abgeschaltet, damit der besetzte Führerstand ausreichend gut versorgt werden kann.

Figur 4 zeigt ein weiteres Ausführungsbeispiel der erfindungsgemäßen Vorrichtung, das demjenigen der Figur 3 weitestgehend entspricht, wobei jedoch im Unterschied zu Figur 3 an die Wärmeträgerleitungen 24 und 23 die zusätzliche Luftaufbereitungseinheit 37 über das Regelventil 38 angebunden werden kann.

Über eine mit dem Regelventil 38 ausgerüstete Rohrleitung 39 ist die zusätzliche Luftaufbereitungseinheit 37 mit den Wärmeträgerleitungen 23 und 24 verbunden, so dass ein verschließbarer Parallelzweig bereitgestellt ist. Die zusätzliche Luftaufbereitungseinheit 37 ist beispielsweise in einem Hilfsbetriebegerüst im Maschinenraum der Lokomotive 1 angeordnet und dient zur Kühlung oder Heizung ihrer elektronischen Komponenten.

## Patentansprüche

1. Schienengeführtes Triebfahrzeug (1) mit zwei stirnseitig angeordneten Führerständen (2,3) und einem Maschinenraum (5) zwischen den Führerständen (2,3), wobei eine erste Luftaufbereitungseinheit (6) zum Klimatisieren des einen Führerstandes (2) und eine zweite Luftaufbereitungseinheit (7) zum Klimatisieren des anderen Führerstandes (3) vorgesehen sind, wobei in dem Maschinenraum (5) eine zentrale Wärmeanlage (40) angeordnet ist und Verbindungsmittel (9) die zentrale Wärmeanlage (40) mit der ersten und zweiten Luftaufbereitungseinheit (6,7) verbinden, wobei die Verbindungsmittel (9) einen Wärmeträger aufweisen, so dass der Austausch von Wärme zwischen den Luftaufbereitungseinheiten (6,7,8) und der zentralen Wärmeanlage (40) ermöglicht ist, und wobei die zentrale Wärmeanlage (40) eine zentrale Kälteeinheit (8) zum Abkühlen des Wärmeträgers aufweist, **dadurch gekennzeichnet, dass** die zentrale Kälteeinheit (8) auch zum Kühlen von Bauteilen des Maschinenraums (5) eingerichtet ist.

2. Schienengeführtes Triebfahrzeug (1) nach Anspruch 1, **dadurch gekennzeichnet , dass** die Verbindungsmittel (9) einen Wärmeträgerkreislauf (22,23,24) mit einer Wärmeträgerflüssigkeit als Wärmeträger aufweisen, wobei eine Umwälzpumpe (25) zum Umwälzen der Wärmeträgerflüssigkeit in dem Wärmeträgerkreislauf (22,23,24) vorgesehen ist.

3. Schienengeführtes Triebfahrzeug (1) nach Anspruch 2, **dadurch gekennzeichnet, dass** der Wärmeträgerkreislauf (22,23,24) Überbrückungszweige (32) zum Überbrücken jeder Luftaufbereitungseinheit (6,7) und ansteuerbare Überbrückungsventile (33,34) aufweist.

4. Schienengeführtes Triebfahrzeug (1) nach einem der vorhergehenden Ansprüche,
**dadurch gekennzeichnet , dass** die zentrale Wärmeanlage (40) eine zentrale Aufwärmeinheit (26,27,28) zum Erwärmen des Wärmeträgers aufweist.

5. Schienengeführtes Triebfahrzeug (1) nach Anspruch 4,
**dadurch gekennzeichnet , dass** die zentrale Aufwärmeinheit (26,27,28) zur Aufnahme von Abwärme eingerichtet ist, die beim Kühlen eines Bauteils des Maschinenraums entsteht, und wobei die Abwärme auf den Wärmeträger übertragen und dieser so erwärmt wird.

6. Schienengeführtes Triebfahrzeug (1) nach Anspruch 5,
**dadurch gekennzeichnet , dass** zentrale Aufwärmeinheit (26,27,28) über einen Ventilverteilblock (26) mit einem Wärmeaustauscher (28) gekoppelt ist, der Teil eines Kühlkreislaufs (29) eines Bauteils des Maschinenraums ist.

7. Schienengeführtes Triebfahrzeug (1) nach einem der vorhergehenden Ansprüche,
**dadurch gekennzeichnet, dass** die zentrale Wärmeanlage (40) über weitere Einkopplungsmittel zur Wärmeaufnahme oder Wärmeabgabe von bzw. an externe Kühl- oder Wärmekreislauf des Triebfahrzeugs verfügt.

8. Schienengeführtes Triebfahrzeug (1) nach einem der vorhergehenden Ansprüche,
**dadurch gekennzeichnet , dass** die erste Luftaufbereitungseinheit (6) und die zweite Luftaufbereitungseinheit (7) zum Wärmeaustausch mit dem Wärmeträgerkreislauf, einen Luftflüssigkeits-Wärme-Tauscher (13) aufweisen.

9. Schienengeführtes Triebfahrzeug (1) nach einem der vorhergehenden Ansprüche,
**dadurch gekennzeichnet, dass** die erste und die zweite Luftaufbereitungseinheit (6,7) jeweils einen Luft-Flüssigkeits-Wärme-Tauscher (13), ein Heizregister (12) und einen Lüfter (14) aufweisen.

10. Schienengeführtes Triebfahrzeug (1) nach Anspruch 9,
**dadurch gekennzeichnet , dass** jeder Luftflüssigkeits-Wärme-Tauscher (13) ein von Luft durchströmbarer Luft-Flüssigwärmeaustauscher (13) ist.

11. Schienengeführtes Triebfahrzeug (1) nach einem der vorhergehenden Ansprüche,
**dadurch gekennzeichnet, dass** die zentrale Wärmeanlage (40) wenigstens einen Flüssigkeits-Flüssigkeits-Wärmeaustauscher aufweist, der mit einem Luft-Flüssigkeits-Wärmeaustauscher der ersten und der zweiten Luftaufbereitungseinheit (6, 7)verbunden ist.

12. Schienengeführtes Triebfahrzeug (1) nach einem der vorhergehenden Ansprüche,
**dadurch gekennzeichnet, dass** die Verbindungsmittel (9) Schaltelemente zum Unterbrechen der Wirkverbindung zwischen der zentralen Wärmeanlage (40) und den Luftaufbereitungseinheiten (6, 7) aufweisen.

## Claims

1. Rail-guided traction unit (1) having two control consoles (2, 3) arranged at the end, and a machine room (5) between the control consoles (2, 3), wherein a first air-conditioning unit (6) is provided for air-conditioning the one control console (2) and a second air-conditioning unit (7) is provided for air-conditioning the other control console (3), wherein a central heating system (40) is arranged in the machine room (5), and connecting means (9) connect the central heating system (40) to the first and second air-conditioning unit (6, 7), wherein the connecting means (9) have a heat transfer medium, permitting the exchange of heat between the air-conditioning units (6, 7, 8) and the central heating system (40), and wherein the central heating system (40) has a central refrigeration unit (8) for cooling the heat transfer medium,
**characterized in that** the central refrigeration unit (8) is also configured to cool components of the machine room (5).

2. Rail-guided traction unit (1) according to Claim 1, **characterized in that** the connecting means (9) have a heat transfer medium circuit (22, 23, 24) with a heat transfer fluid as a heat transfer medium, wherein a circulation pump (25) is provided for circulating the heat transfer fluid in the heat transfer medium circuit (22, 23, 24).

3. Rail-guided traction unit (1) according to Claim 2,
**characterized in that** the heat transfer medium circuit (22, 23, 24) has bypass branches (32) for bypassing each air-conditioning unit (6, 7), and controllable bypass valves (33, 34).

4. Rail-guided traction unit (1) according to one of the preceding claims,
**characterized in that** the central heating system (40) has a central heating unit (26, 27, 28) for heating the heat transfer medium.

5. Rail-guided traction unit (1) according to Claim 4,
**characterized in that** the central heating unit (26, 27, 28) is configured to absorb waste heat which is produced when a component of the machine room cools, and wherein the waste heat is transmitted to the heat transfer medium and said medium is heated up in this way.

6. Rail-guided traction unit (1) according to Claim 5,
**characterized in that** the central heating unit (26, 27, 28) is coupled via a valve distribution block (26) to a heat exchanger (28) which is part of a cooling circuit (29) of a component of the machine room.

7. Rail-guided traction unit (1) according to one of the preceding claims,
**characterized in that** the central heating system (40) has further coupling means for absorbing heat or outputting heat from and respectively to an external cooling circuit or heating circuit of the traction unit.

8. Rail-guided traction unit (1) according to one of the preceding claims,
**characterized in that** the first air-conditioning unit (6) and the second air-conditioning unit (7) have an air/fluid heat exchanger (13) for exchanging heat with the heat transfer medium circuit.

9. Rail-guided traction unit (1) according to one of the preceding claims,
**characterized in that** the first and the second air-conditioning unit (6, 7) each has an air/fluid heat exchanger (13), a heat register (12) and a fan (14).

10. Rail-guided traction unit (1) according to Claim 9,
**characterized in that** each air/fluid heat exchanger (13) is an air/fluid heat exchanger (13) through which air can flow.

11. Rail-guided traction unit (1) according to one of the preceding claims,
**characterized in that** the central heating system (40) has at least one fluid/fluid heat exchanger which is connected to an air/fluid heat exchanger of the first and of the second air-conditioning unit (6, 7).

12. Rail-guided traction unit (1) according to one of the preceding claims,
**characterized in that** the connecting means (9) have switching elements for interrupting the operative connection between the central heating system (40) and the air-conditioning units (6, 7).

## Revendications

1. Véhicule ( 1 ) de traction guidé sur rail et comprenant deux postes ( 2, 3 ) de conduite disposés du côté frontal et une chambre ( 5 ) de machine entre les postes ( 2, 3 ) de conduite, dans lequel il est prévu une première unité ( 6 ) de traitement de l'air pour la climatisation de l'un des postes ( 2 ) de conduite et une deuxième unité ( 7 ) de traitement de l'air pour la climatisation de l'autre poste ( 3 ) de conduite, une installation ( 40 ) de chauffage centrale disposée dans la chambre ( 5 ) de machine et des moyens ( 9 ) de liaison reliant l'installation ( 40 ) de chauffage centrale à la première et à la deuxième unité ( 6, 7 ) de traitement de l'air, les moyens ( 9 ) de liaison ayant un agent caloporteur de manière à rendre possible l'échange de chaleur entre les unités ( 6, 7, 8 ) de traitement de l'air et l'installation ( 40 ) de chauffage centrale et dans lequel l'installation ( 40 ) de chauffage centrale a un groupe ( 8 ) central de froid pour refroidir l'agent caloporteur,
**caractérisé en ce que** le groupe ( 8 ) central de froid est conçu pour refroidir des éléments de la chambre ( 5 ) de machine.

2. Véhicule ( 1 ) de traction guidé sur rail suivant la revendication 1, **caractérisé en ce que** les moyens ( 9 ) de liaison ont un circuit ( 22, 23, 24 ) d'agent caloporteur ayant un agent caloporteur liquide comme agent caloporteur, une pompe ( 25 ) de recirculation étant prévue pour la recirculation de l'agent caloporteur liquide dans le circuit ( 22, 23, 24 ) d'agent caloporteur.

3. Véhicule ( 1 ) de traction guidé sur rail suivant la revendication 2, **caractérisé en ce que** le circuit ( 22, 23, 24 ) d'agent caloporteur a des branches ( 32 ) de court-circuit pour court-circuiter chaque unité ( 6, 7 ) de traitement de l'air et des vannes ( 33, 34 ) de court-circuit pouvant être commandées.

4. Véhicule ( 1 ) de traction guidé sur rail suivant l'une des revendications précédentes, **caractérisé en ce que** l'installation ( 40 ) de chauffage centrale a un groupe ( 26, 27, 28 ) de chauffage central pour réchauffer l'agent caloporteur.

5. Véhicule ( 1 ) de traction guidé sur rail suivant la revendication 4, **caractérisé en ce que** le groupe ( 26, 27, 28 ) de chauffage central est conçu pour absorber de la chaleur perdue qui se crée lors de refroidissement d'un élément de la chambre de machine et la chaleur perdue est transmise à l'agent caloporteur et celui-ci s'échauffe.

6. Véhicule ( 1 ) de traction guidé sur rail suivant la revendication 5, **caractérisé en ce que** le groupe ( 26, 27, 28 ) de chauffage central est couplé par un bloc ( 26 ) distributeur à un échangeur de chaleur ( 28 ) qui fait partie d'un circuit ( 29 ) de refroidissement d'un élément de la chambre de machine.

7. Véhicule ( 1 ) de traction guidé sur rail suivant l'une des revendications précédentes, **caractérisé en ce que** l'installation ( 40 ) de chauffage centrale dispose d'autres moyens d'injection pour absorber de la chaleur d'un circuit extérieur de refroidissement ou de chauffage du véhicule de traction ou pour leur en céder.

8. Véhicule ( 1 ) de traction guidé sur rail suivant l'une des revendications précédentes, **caractérisé en ce que** la première unité ( 6 ) de traitement de l'air et la deuxième unité ( 7 ) de traitement de l'air ont un échangeur de chaleur ( 13 ) air-liquide pour l'échange de chaleur avec le circuit de l'agent caloporteur.

9. Véhicule ( 1 ) de traction guidé sur rail suivant l'une des revendications précédentes, **caractérisé en ce que** la première et la deuxième unité ( 6, 7 ) de traitement de l'air ont respectivement un échangeur de chaleur ( 13 ) air-liquide, un registre ( 12 ) de chauffage et un ventilateur ( 14 ).

10. Véhicule ( 1 ) de traction guidé sur rail suivant la revendication 9, **caractérisé en ce que** chaque échangeur de chaleur ( 13 ) air-liquide est un échangeur de chaleur ( 13 ) air-liquide, qui peut être parcouru par de l'air.

11. Véhicule ( 1 ) de traction guidé sur rail suivant l'une des revendications précédentes, **caractérisé en ce que** l'installation ( 40 ) de chauffage centrale a au moins un échangeur de chaleur liquide-liquide, qui communique avec un échangeur de chaleur air-liquide de la première et de la deuxième unité ( 6, 7 ) de traitement de l'air.

12. Véhicule ( 1 ) de traction guidé sur rail suivant l'une des revendications précédentes, **caractérisé en ce que** les moyens ( 9 ) de liaison ont des éléments de commutation pour interrompre la liaison efficace entre l'installation ( 40 ) de chauffage centrale et les unités ( 6, 7 ) de traitement de l'air.
